# EUROPEAN PATENT APPLICATION

(11) **EP 3 059 943 A1**
(43) Date of publication of application: **24.08.2016**
(21) Application number: 16154754.2
(22) Date of filing: 09.02.2016
(51) Int. Cl.: H04N 7/15, H04L 12/18, H04M 3/56

(54) **IMAGE MANAGEMENT SYSTEM, COMMUNICATION DEVICE, COMMUNICATION SYSTEM, NON-TRANSITORY RECORDING MEDIUM, AND IMAGE MANAGEMENT METHOD**

(30) Priority: 17.02.2015 JP 2015028808
(71) Applicant: Ricoh Company, Ltd., Tokyo 143-8555 (JP)
(72) Inventor: TAMURA, Hideki, Tokyo, 143-8555 (JP)
(74) Representative: Schwabe - Sandmair - Marx

(57) **Abstract**

An image management system (101) for transmitting information via a session established between communication terminals (102a, 102b) includes a storage unit configured to store image information of an image output from at least one of a first communication terminal and a second communication terminal in a first session in which the first communication terminal and the second communication terminal have participated, the storage unit storing the image information in association with identification information of the first session; and a transmission unit configured to transmit (S1410), to the first communication terminal and the second communication terminal, the image information stored in the storage unit and associated with the identification information of the first session when the first communication terminal and the second communication terminal participate in a second session which differs from the first session.

## Description

### BACKGROUND OF THE INVENTION

### 1. Field of the Invention

The disclosures herein generally relate to an image management system, a communication device, a communication system, a non-transitory recording medium having a program recorded therein that is executable by a computer, and an image management method.

### 2. Description of the Related Art

In order to meet requests for reducing expenses and times for business trips, a communication system for performing a conversation (communication) or a conference via a communication network such as the Internet and a private line is popular. In the communication system, when the communication is started between communication terminals, the communication between bases is performed by transmitting/receiving image data, sound data, and the like. Further, for performing the communication between the bases smoothly, in addition to content for the conversation, a method for sharing other content between the bases is known in the art.

Japanese Unexamined Patent Application Publication No. 2004-221842 discloses a technique for performing transmitting/receiving sound between a plurality of terminal apparatuses and for controlling a session in order to perform transmitting/receiving an image and handwritten data between the terminal apparatuses. Thus, the technique enables to perform sound conversation while a user is pointing at the image.

Using the technique disclosed in Japanese Unexamined Patent Application Publication No. 2004-221842, the session such as a remote class can be held between the bases apart from each other. When the remote class is conducted using the above communication system, there is a case in which a continuation of the remote class is required to be conducted with black board information of the remote class performed previously. However, it is difficult to select and use image information of the previous session from pieces of image information recorded by unspecified users when a session such as the remote class is held using a shared communication terminal, even if handwritten image information has been recorded.

As described above, when the session such as the remote class is held using the shared communication terminal such as an interactive white board, it is difficult to restart the session using the image information of the session recorded in the past.

### SUMMARY OF THE INVENTION

It is a general object of at least one embodiment of the present invention to provide an image management system, a communication device, a communication system, a non-transitory recording medium having a program recorded therein that is executable by a computer, and an image management method that substantially obviate one or more problems caused by the limitations and disadvantages of the related art.

An embodiment of the present invention provides an image management system for transmitting information via a session established between communication terminals including a storage unit configured to store image information of an image output from at least one of a first communication terminal and a second communication terminal in a first session in which the first communication terminal and the second communication terminal have participated, the storage unit storing the image information in association with identification information of the first session and a transmission unit configured to transmit, to the first communication terminal and the second communication terminal, the image information stored in the storage unit and associated with the identification information of the first session when the first communication terminal and the second communication terminal participate in a second session which differs from the first session.

An embodiment of the present invention also provides a non-transitory recording medium having a program recorded therein that is executable by a computer, the program when executed causing the computer to implement functions of a storage unit configured to store image information of an image output from at least one of a first communication terminal and a second communication terminal in a first session in which the first communication terminal and the second communication terminal have participated, the storage unit storing the image information in association with identification information of the first session and a transmission unit configured to transmit, to the first communication terminal and the second communication terminal, the image information stored in the storage unit and associated with the identification information of the first session when the first communication terminal and the second communication terminal participate in a second session which differs from the first session.

An embodiment of the present invention also provides an image management method for transmitting information via a session established between communication terminals including a step of storing, in a storage unit, image information of an image output from at least one of a first communication terminal and a second communication terminal in a first session in which the first communication terminal and the second communication terminal have participated, the storage unit storing the image information in association with identification information of the first session and a step of transmitting, to the first communication terminal and the second communication terminal, the image information stored in the storage unit and associated with the identification information of the first session when the first communication terminal and the second communication terminal participate in a second session which differs from the first session.

### BRIEF DESCRIPTION OF THE DRAWINGS

Fig. 1 is a drawing illustrating a configuration example of a communication system according to an embodiment;
Fig. 2 is an external view of an interactive white board (IWB) according to the embodiment;
Fig. 3 is a drawing illustrating an example of a hardware configuration of the IWB and a communication terminal according to the embodiment;
Fig. 4 is a drawing illustrating an example of a hardware configuration of a computer according to the embodiment;
Fig. 5 is a drawing illustrating an example of a hardware configuration of an information terminal according to the embodiment;
Fig. 6 is a drawing illustrating a functional configuration of the communication system according to the embodiment;
Fig. 7 is a drawing illustrating an example of functional configuration of an image information management unit and a session management unit according to the embodiment;
Figs. 8A and 8B are drawings illustrating examples of an authentication management table and a terminal management table according to the embodiment;
Fig. 9 is a drawing illustrating an example of a session management table according to the embodiment;
Fig. 10 is a sequence chart illustrating an example of an authentication process according to the embodiment;
Fig. 11 is a sequence chart illustrating an example of an establishment process of a session according to the embodiment;
Fig. 12 is a sequence chart illustrating an example of an accumulation process of image information according to the embodiment;
Fig. 13 is a drawing illustrating an example of an image information management table according to the embodiment;
Fig. 14 is a sequence chart illustrating an example of a restoring process of the image information according to the embodiment;
Fig. 15 is a drawing illustrating an example of a selecting screen of history of the image information according to the embodiment;
Fig. 16 is a drawing illustrating an example of a displaying screen of the communication terminal according to the embodiment;
Fig. 17 is a sequence chart illustrating an example of a process after the image information is restored according to the embodiment; and
Fig. 18 is a drawing illustrating another configuration example of the communication system according to the embodiment.

### DESCRIPTION OF THE PREFERRED EMBODIMENTS

In the following, embodiments of the present invention will be described with reference to the accompanying drawings.

### <System configuration>

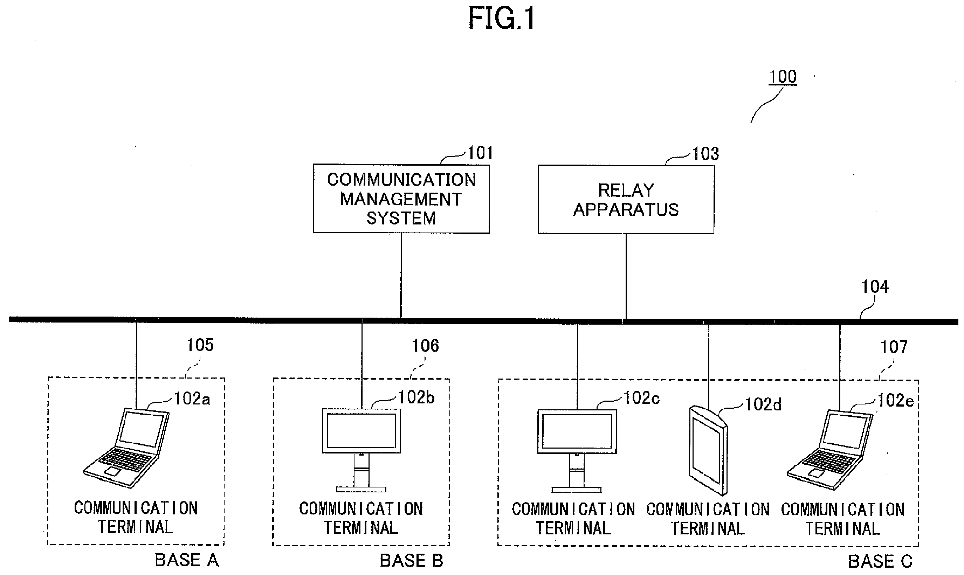

FIG. 1 is a drawing illustrating a configuration example of a communication system 100 according to an embodiment of the present invention. The communication system 100 includes a communication management system 101, a plurality of communication terminals 102a, 102b, 102c, 102d, and 102e, a relay apparatus 103 and the like which are connected to a network 104 such as the Internet and a local area network (LAN). In the following, an arbitrary communication terminal (communication device) of the communication terminals 102a to 102e is referred to as "the communication terminal 102".

The communication management system (image management system) 101 is an information processing apparatus which manages a session, which is held in the communication system 100, such as a remote class and a TV conference. For example, the communication management system 101 may perform login authentication of the communication terminals 102a to 102e, management of a connection status, connection control of a session start and a session end, management of various kinds of information and the like.

The communication terminals 102a to 102e are examples according to the present embodiment. The communication terminal 102 may be a wide use information terminal such as a personal computer (PC), a tablet terminal, and a smartphone for example. The communication terminal 102 may be a special (private) communication terminal such as a TV conference apparatus. Further, the communication terminal 102 may be an interactive whiteboard (referred to as the IWB hereinafter) or the like. The IWB may share image information which is input by handwriting with other terminals 102 which participate in the session. It should be noted that in a case in which a wide use information processing apparatus is used for the communication terminal 102, each function of the communication terminal 102 may be, for example, implemented by application programs which corresponds to the communication system 100 installed in the communication terminal 102.

In the example in FIG. 1, the communication terminals 102a and 102e are PCs, the communication terminals 102b and 102c are IWBs, the communication terminal 102d is the information apparatus such as a the tablet terminal and the smartphone. In the following descriptions, the IWB (communication terminal 102b and 102c) according to the present embodiment includes a camera, a microphone, a speaker and the like internally or externally and can transmit/receive sound and images similar to another communication terminal 102.

According to the above described configuration, in the communication system 100 according to the present embodiment, a user of the communication terminal 102 may conduct the session such as the remote class and the TV conference with another user of the communication terminal 102, for example, using images and sound performed transmitting/receiving in real time. Further, the communication terminals 102 may share image information such as a character, a figure, and a symbol which are input by handwriting.

For example, in FIG. 1, an instructor of the remote class can use the communication terminal 102a installed in a base A 105 in order to conduct the remote class for one or more students at the communication terminal 102b installed in a base B 106. At that time, image information (such as a character, a figure, and a symbol which are input by handwriting) input from the communication terminal 102a by the instructor at the base A 105 is displayed in the communication terminal 102b at the base B 106. Similarly, the image information input from the communication terminal 102b by the student at the base B 106 is displayed in the communication terminal 102a at the base A 105.

At that time, the communication management system 101 according to the present embodiment records the image information input in the communication terminals 102a and 102b in an image information database (DB). Further, for example, the instructor of the remote class can call out (select), from pieces of image information recorded in the image information DB, image information which has been recorded in a previous remote class when conducting the remote class again between the communication terminal 102a and the communication terminal 102b. In this way, the instructor of the remote class can conduct a continuation of the previous remote class.

Further, as another example, the instructor of the remote class may use the communication terminal 102b installed in the base B 106 in order to conduct the remote class for the plurality of students at the base C 107 connected to the communication terminals 102c, 102d, 102e, and the like. At that time, image information input from the communication terminal 102b by the instructor at the base B106B is displayed in the communication terminals 102c, 102d, and 102e at the base C107. Similarly, image information input from the communication terminal 102c by the student at the base C107 is displayed in the communication terminal 102b at the base B106 and the communication terminal 102d and 102e at the base C107.

It should be noted that the remote class is an example of a predetermined session held by the communication system 100. The predetermined session held by the communication system 100 may be a conference, a presentation or the like. Moreover, for example, a communication terminal such as a projector and an electronic signboard (digital signage) other than the communication terminals 102a to 102e may be arranged in each of the bases 105A, 105B, and 107C in a communicable (able to communicate) manner.

### <Hardware configuration>

Next, a hardware configuration of the present embodiment will be described.

### (External view of IWB)

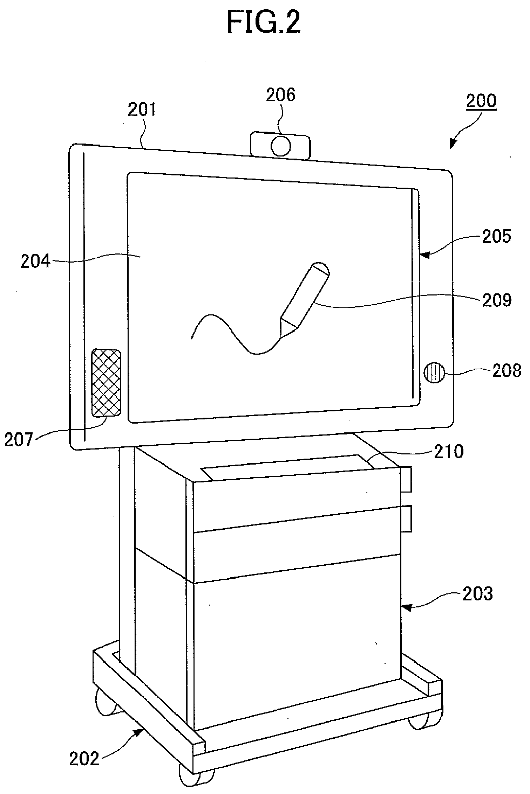

FIG. 2 is an external view of an interactive white board (IWB) according to the present embodiment. It should be noted that the IWB is an example of the communication terminal 102.

The IWB 200 (the communication terminals 102b and 102c) may include, for example, a display 201, a stand (holder) 202, and an equipment storage unit 203. The display 201 may include a flat panel such as a liquid crystal panel and a plasma panel. On a front face of the display 201, a display face 204 which displays an image and a touch panel 205 are arranged.

Further, the IWB 200 may include a camera 206 which captures an image of the remote conference, the TV conference and the like, a speaker 207 which outputs sound, a microphone 208 which obtains sound, and the like on the display 201, for example. Alternatively, the camera 206, the speaker 207, the microphone 208 and the like may be structures external to the IWB 200.

An input device 209 includes a signal transmission device. When a pen nib touches the display surface 204, the signal transmission device transmits a note detection signal (a touch detection signal) as a radio signal. In response to an event that the note detection signal transmitted from the input device 209 is received by the IWB 200, the display 201 displays the character, the figure, and the like which are written in a coordinate position detected by the touch panel 205.

Further, when a pen root touches the display surface 204, the signal transmission device transmits a deletion detection signal (a touch detection signal) as a radio signal. In response to an event in which the deletion detection signal transmitted from the input device 209 is received by the IWB 200, the display 201 eliminates, from the display surface 204, the character, the figure, and the like which are written in the coordinate position detected by the touch panel 205.

The equipment storage unit 203 may store various kinds of equipment such as a main body of the IWB 200, for example. Further, on an upper face of the equipment storage unit 203, a keyboard 210 for performing an input operation is mounted.

### (Hardware configuration of IWB)

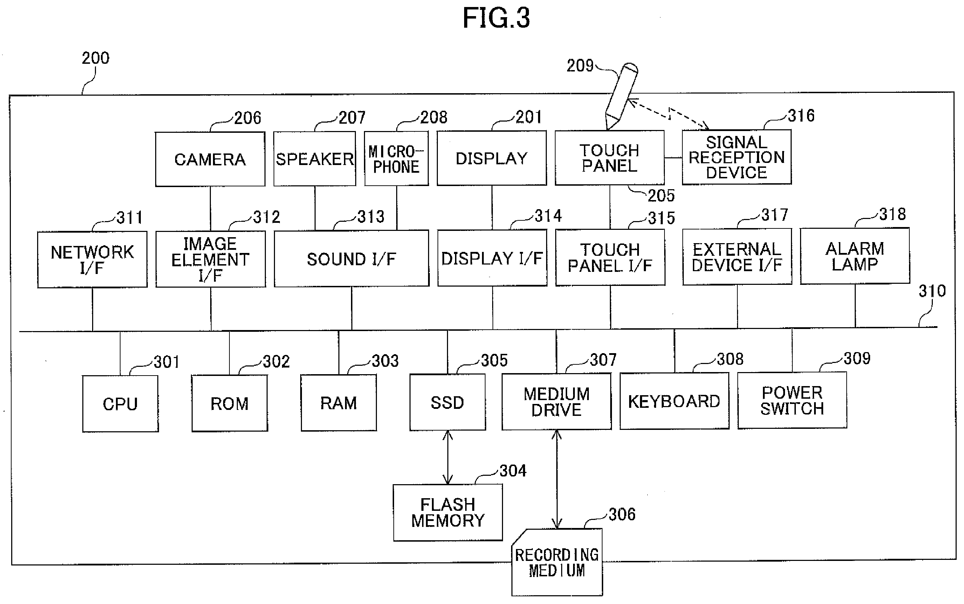

FIG. 3 is a drawing illustrating an example of a hardware configuration of the IWB 200 according to the present embodiment. The IWB 200 includes a central processing unit (CPU) 301, a read only memory (ROM) 302, a random access memory (RAM) 303, a flash memory 304, a solid state drive (SSD) 305, a medium drive 307, and a keyboard 308. Further, the IWB 200 includes a power switch 309, a network interface (I/F) 311, a camera 206, an imaging element interface (I/F) 312, the speaker 207, the microphone 208, a sound interface (I/F) 313, the display 201, and a display (I/F) 314. Moreover, the IWB 200 includes the touch panel 205, a touch panel interface (I/F) 315, a signal reception device 316, an external device interface (I/F) 317, an alarm lamp 318, a bus 310 and the like.

For example, the CPU 301 may be an arithmetic and logic unit which reads a program and/or data from the ROM 302 and/or the flash memory 304, and executes processes according to the program and/or the data to implement various functions of the IWB 200. The ROM 302 is a non-volatile memory which previously stores a program such as an initial program loader (IPL) used for starting the CPU 301. The RAM 303 is a volatile memory used as a work area of the CPU 301 or the like.

For example, the flash memory 304 may be a storage device which stores an operating system (OS), application programs, various data, and the like. The SSD 305 controls reading of the various data from the flash memory 304 and writing of the various data to the flash memory 304 according to the control by the CPU 301. A medium drive 307 may control reading of the various data from a recording medium 306 and writing (storing) of the various data to the recording medium 306, for example. The recording medium may be a memory card.

The keyboard 308 is an input device for receiving an operation by a user of the IWB 200. The power switch 309 is a switch for switching the power of the IWB 200 between on and off. The network I/F 311 is a communication interface for transmitting data using the network 104.

The camera 206 may include an imaging element for capturing an object according to the control of the CPU 301 such as a complementary metal oxide semiconductor (CMOS), a charge coupled device (CCD), or the like. The imaging element (I/F) 312 controls the capturing by the camera 206 and converts the captured data into predetermined image data. The speaker 207 coverts sound signals into sound in order to output the sound. The microphone 208 converts the acquired sound into electrical signals. The sound (I/F) 313 controls input/output of the speaker 207 and the microphone 208.

The display 201 may be an example of a display device such as a liquid crystal display (LCD). The display (I/F) 314 controls displaying of the image by the display 201 according to the control of the CPU 301.

The touch panel 205 is an input device for receiving an input by the input device 209. The touch panel (I/F) 315 is a control interface used for the touch panel 205. The signal reception device 316 receives the touch detection signal transmitted from the input device 209, and outputs the touch detection signal to the touch panel 205.

The external device (I/F) 317 is an example of an interface such as a universal serial bus (USB) for connecting various external devices. The alarm lamp 318 includes a light emitting element for notifying (signaling) abnormality of each of the various functions of the IWB 200 or the like. The bus 310 electrically connects the above described configuration elements to each other, and transmits (transfers) address signals, data signals, various control signals and the like.

According to the above described configuration, a touch panel driver which is a control circuit of the touch panel 205 can recognize that an input operation is performed based on the touch detection signal transmitted from the input device 209, and output the image information (stroke information) which corresponds to the input operation by the input device 209. Further, the display 201 outputs the image information which is output by the touch panel driver in response to the input operation, and the image based on the image information transmitted from the communication terminal 102 via the network 104 in a superimposing manner.

### (Hardware configuration of communication management system)

The communication management system 101 shown in FIG. 1 includes a hardware configuration of a typical computer. It should be noted that a hardware configuration of the relay apparatus 103 may be similar to the hardware configuration of the communication management system 101.

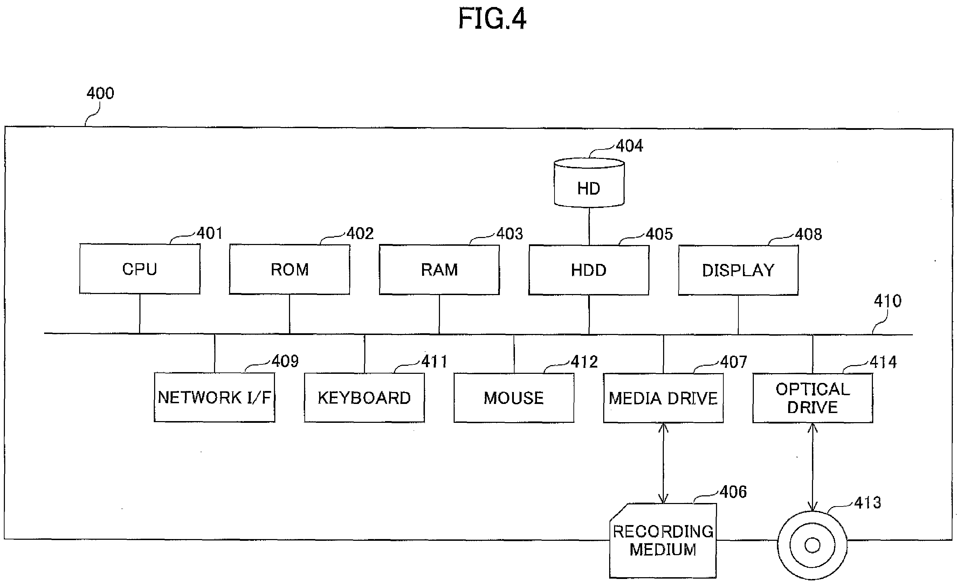

FIG. 4 is a diagram illustrating an example of the hardware configuration of a computer 400 according to the present embodiment. The computer 400 includes a CPU 401, a ROM 402, a RAM 403, a HD (Hard Disk) 404, an HDD (Hard Disk Drive) 405, a media drive 407, a display 408, a network I/F 409, a keyboard 411, a mouse 412, an optical drive 414, a bus 410, and the like.

For example, The CPU 401 may be an arithmetic and logic unit which reads a program and/or data from the ROM 402 and/or the HD 404, and executes processes according to the program and/or the data to implement various functions of the computer 400. The ROM 402 is a non-volatile memory which previously stores a program such as an initial program loader (IPL) used for starting the CPU 401. The RAM 403 is a volatile memory used as a work area of the CPU 401 or the like.

For example, the HD 404 may be a storage device which stores an operating system (OS), application programs, various data, and the like. The HDD 405 controls reading of the various data from the HD 404 and writing of the various data to the HD 404 according to the control by the CPU 301. The display 408 is a display device which displays various kinds of information such as a cursor, a menu, a window, text, an image, and the like.

The network I/F 409 is an interface for communicating data by using the network 104. The keyboard 411 is an example of an input device for receiving an operation such as text, a numerical value, and various instructions by the user of the IWB 200. The mouse 412 is an example of a pointing device for receiving an operation such as selection and execution of various kinds of commands, selection of processing target, and movement of the cursor.

The medium drive 407 controls reading of data to the recording medium 406 and writing of data from the recording medium 406, for example. The recording medium 406 may be a memory card. The optical drive 414 controls reading of data from the optical disk 413 and writing of data to the optical disk 413. The optical disk 413 is an example of a detachable recording medium. The bus 410 electrically connects the above described configuration elements to each other, and transmits address signals, data signals, various control signals and the like.

It should be noted that the hardware configuration of the computer 400 is an example, and the present invention is not limited to this. For example, the display 408, the keyboard 411, the mouse 412, and the like may be structures external to the computer 400.

### (Hardware configuration of information terminal)

Next, a configuration of an information terminal which is the communication terminal 102 such as the communication terminal 102a, 102d, and 102e other than the IWB 200 will be described.

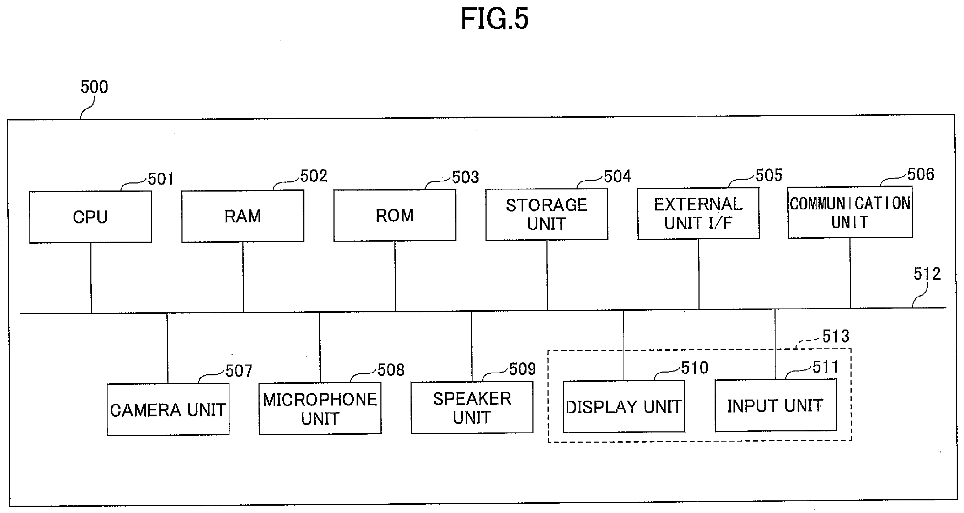

FIG. 5 is a diagram illustrating an example of a hardware configuration of an information terminal 500 according to the present embodiment. It should be noted that the information terminal 500 may be an information processing apparatus such as a desktop PC, a notebook PC, a tablet terminal, and a smartphone. The information terminal 500 includes a configuration of a typical computer. In an example FIG. 5, the information terminal 500 includes a CPU 501, a RAM 502, a ROM 503, a storage unit 504, an external interface (I/F) 505, a communication unit 506, a camera unit 507, a microphone unit 508, a speaker unit 509, a display unit 510, an input unit 511, a bus 512, and the like.

The CPU 501 may be an arithmetic and logic unit which reads a program and/or data from the ROM 503 and/or the storage unit 504, loads the program and/or the data in the RAM 504, and executes processes according to the program and/or the data to implement various functions of the information terminal 500. The RAM 502 is a volatile memory used as a work area of the CPU 501 or the like. The ROM 502 is a non-volatile memory which can store programs and/or data even when the power is turned off. For example, the storage unit 504 may be a storage device such as a HDD, a SSD and a flash ROM and store an operating system (OS), application programs, various data, and the like.

The external I/F 505 is an interface for connecting external devices. The communication unit 506 is a communication interface for communicating data by using the network 104.

The camera unit 507 includes an imaging element for capturing an image and converts the captured image into predetermined image data. The microphone unit 508 includes a sound acquisition element such as a microphone, converts the acquired sound into electrical signals, and converts the electrical signals into predetermined sound data. The speaker unit 509 coverts the sound signals, which are input, into sound in order to output the sound.

The display unit 510 may include a display element such as a liquid crystal display (LCD) and display a displaying screen according to a program executed in the information terminal 500. The input unit 511 may include an input element such as a touch panel and a keyboard for receiving an input operation by the user. It should be noted that the display unit 510 and the input unit 511 may be, for example, a display input unit 513 such as an integrated touch panel display. The bus 512 is connected to each of the above elements, and transmits address signals, data signals, various control signals, and the like.

It should be noted that the hardware configuration of the information terminal 500 is an example, and the present invention is not limited to this. For example, at least one of the display unit 510, the bus 512, the camera unit 507, the microphone unit 508, and the speaker unit 509 may be disposed outside of the information terminal 500.

### <Functional Configuration >

Next, a functional configuration of the communication system 100 according to the present embodiment will be described.

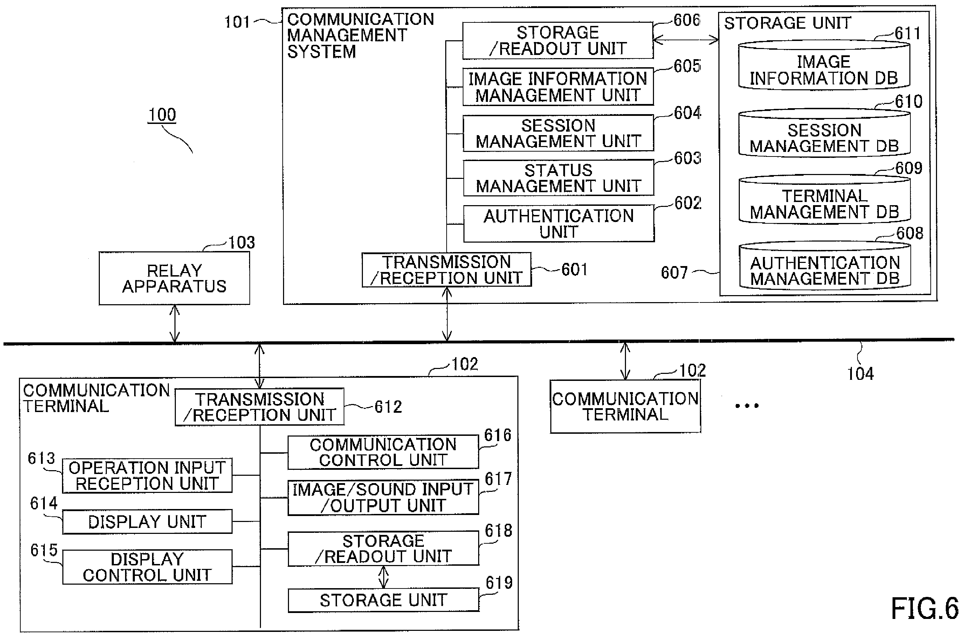

FIG. 6 is a diagram illustrating a functional configuration of the communication system 100 according to the present embodiment. The communication system 100 includes the communication management system 101, the communication terminals 102 and the relay apparatus 103, each of which is connected to the network 104.

In FIG. 6, the communication management system 101 manages communications between the communication terminals 102. The communication terminals 102 can perform the communication according to the management of the communication management system 101 via the relay apparatus 103.
The relay apparatus 103 relays information such as an image and sound transmitted/received between the communication terminals 102.

### (Functional configuration of communication terminal)

The communication terminal 102 includes a transmission/reception unit 612, an operation input reception unit 613, a display unit 614, a display control unit 615, a communication control unit 616, an image/sound input/output unit 617, a storage/readout unit 618, a storage unit 619, and the like.

The transmission/reception unit 612 is a unit (means) for transmitting various data (or information) to other communication terminals 102, the relay apparatus 103, and the like and receiving the various data from the other communication terminals 102, the relay apparatus 103, and the like. In a case in which the communication terminal 102 is the IWB 200, the transmission/reception unit 612 is realized by programs executed by the CPU 301 shown in FIG. 3, the network I/F 311, and the like. Further, in a case in which the communication terminal 102 is the information terminal 500, the transmission/reception unit 612 is realized by programs executed by the CPU 501 shown in FIG. 5, the communication unit 506, and the like.

The operation input reception unit 613 receives an input operation, a selection operation, and the like from the user. In the case in which the communication terminal 102 is the IWB 200, the operation input reception unit 613 is realized by programs executed by the CPU 301 shown in FIG. 3, the keyboard 308, the touch panel 205, the touch panel (I/F) 315, the signal reception device 316 and the like. Further, in the case in which the communication terminal 102 is the information terminal 500, the operation input reception unit 613 is realized by programs executed by the CPU 501 shown in FIG. 5, the input unit 511 (or the display input unit 513), and the like.

The display unit 614 is a unit (means) for displaying a display image in accordance with control of the display control unit 615. In the case in which the communication terminal 102 is the IWB 200, the display unit 614 is realized by the display 201 and the like. Further, in the case in which the communication terminal 102 is the information terminal 500, the display unit 614 corresponds to the display unit 510 shown in FIG. 5.

For example, the display control unit 615 may perform control for displaying, in the display unit 614, image information transmitted from the communication terminal 102, which is a communication partner, and image information which is input in own apparatus. In the case in which the communication terminal 102 is the IWB 200, the display control unit 615 is realized by programs executed by the CPU 301 shown in FIG. 3, the display (I/F) 314 and the like. Further, in the case in which the communication terminal 102 is the information terminal 500, the display control unit 615 is realized by programs executed by the CPU 501 shown in FIG. 5, and the like.

The communication control unit 616 may perform various kinds of communication controls such as a login process to the communication management system 101, establishment of the session and disconnection. In the case in which the communication terminal 102 is the IWB 200, the communication control unit 616 is realized by programs executed by the CPU 301 shown in FIG. 3. Further, in the case in which the communication terminal 102 is the information terminal 500, the communication control unit 616 is realized by programs executed by the CPU 501 shown in FIG. 5.

The image and sound input/output unit 617 may perform a sound input/output process of the remote class, the TV conference and the like. The image and sound input/output unit 617 may also perform an input process of an image (such as video of meeting) of the session. In the case in which the communication terminal 102 is the IWB 200, the image and sound input/output unit 617 is realized by programs executed by the CPU 301 shown in FIG. 3, the imaging element (I/F) 312, the sound (I/F) 313 and the like. Further, in the case in which the communication terminal 102 is the information terminal 500, the image and sound input/output unit 617 is realized by programs executed by the CPU 501 shown in FIG. 5, the camera unit 507, the microphone unit 508, the speaker unit 509 and the like.

The storage/readout unit 618 may perform control of writing of various data to the storage unit 619 and reading of various data from the storage unit 619. In the case in which the communication terminal 102 is the IWB 200, the storage/readout unit 618 is realized by programs executed by the CPU 301 shown in FIG. 3, the SSD 305 and the like. Further, in the case in which the communication terminal 102 is the information terminal 500, the image and sound input/output unit 617 is realized by programs executed by the CPU 501 shown in FIG. 5, and the like.

The storage unit 619 is a unit (means) for storing the various data, information, and the like. In the case in which the communication terminal 102 is the IWB 200, the storage unit 619 is realized by the RAM 303, the flash memory 304 shown in FIG. 3, and the like. Further, in the case in which the communication terminal 102 is the information terminal 500, the storage unit 619 is realized by the RAM 502, the storage unit 504 shown in FIG. 5, and the like.

### (Functional configuration of communication management system)

The communication management system 101 includes a transmission/reception unit 601, an authentication unit 602, a status management unit 603, a session management unit 604, an image information management unit 605, a storage/readout unit 606, a storage unit 607, and the like.

The transmission/reception unit 601 is a unit (means) for transmitting various data (or information) to the communication terminals 102, the relay apparatus 103, and the like and receiving the various data from the other communication terminals 102, the relay apparatus 103, and the like, via the network 104. The transmission/reception unit 601 is realized by programs executed by the CPU 401 shown in FIG. 4, the network I/F 409, and the like.

The authentication unit 602 may perform authentication of the communication terminal 102 by determining whether a communication ID and a password which are included in a login request received from the communication terminal 102 via the transmission/reception unit 601 are included in an authentication management DB 608 stored in the storage unit 607. The authentication unit 602 may be realized by programs executed by the CPU 401 shown in FIG. 4.

The status management unit 603 manages operational status (such as communicating, communicable (be able to communicate), not available) of each of the communication terminals 102 included in the communication system 100 using a terminal management unit 609 stored in the storage unit 607. The status management unit 603 may be realized by programs executed by the CPU 401 shown in FIG. 4.

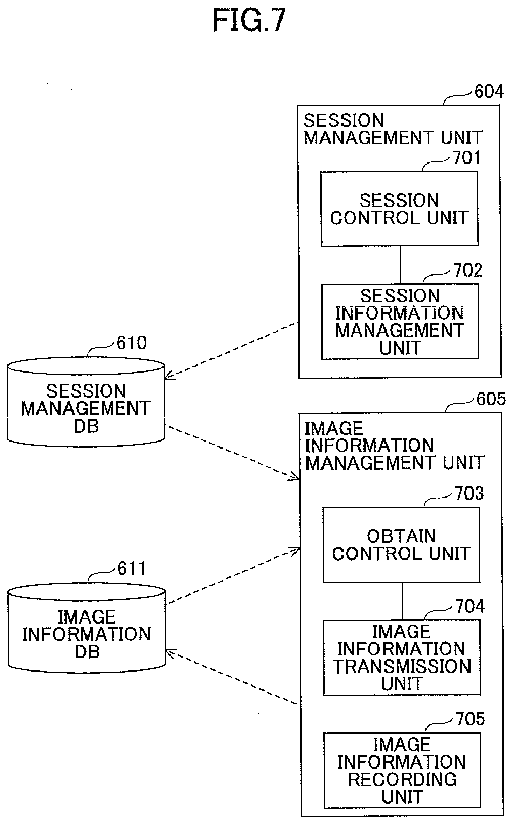

The session management unit 604 may be realized by programs executed by the CPU 401 shown in FIG. 4. For example, the session management unit 604 may include a session control unit 701 and a session information management unit 702 as shown in FIG. 7. FIG.7 is a drawing illustrating an example of a functional configuration of the image information management unit 605 and the session management unit 604 according to the present embodiment.

The session control unit 701 may control the establishment of the session, such as the remote class and the remote conference, between the communication terminals. The session control unit 701 may also perform connection control of the session such as participation of the communication terminal 102 into the established session and disconnection of the session.

The session information management unit (management unit) 702 manages, in the session established between the communication terminals 102, identification information of the session (session ID) and identification information of the communication terminals 102 which participates in the session (communication ID) in association with each other. For example, the session information management unit 702 records the session ID in which the communication terminal 102a and the communication terminal 102b shown in FIG. 1 participate, the communication ID of the communication terminal 102a, and the communication ID of the communication terminal 102b in a session management DB 610 in association with each other. In this way, the communication management system 101 may easily obtain a list of one or more session IDs in which the communication terminal 102a and the communication terminal 102b participated in the past.

The image information management unit 605 shown in FIG. 6 may be realized by programs executed by the CPU 401 shown in FIG. 4. For example, the session management unit 604 may include an obtain control unit 703, an image information transmission unit 704, an image information recording unit 705, and the like as shown in FIG. 7.

Among information transmitted in the session established between the communication terminals 102, the image information recording unit 705 records, in the image information DB 611, at least image information of an image displayed (output) in the communication terminals 102 in association with the session ID.

For example, the image information recording unit 705 may record, in the session in which the communication terminal 102a and the communication terminal 102b shown in FIG. 1 participate, the image information which is output from the communication terminal 102a and the communication terminal 102b in association with the session ID. Further, the image information recording unit 705 may record (store), in the session in which the communication terminal 102a and the communication terminal 102b participate, the image information which is input in the communication terminal 102a and the image information which is input in the communication terminal 102b in the image information DB 611 in association with the session ID.

The obtain control unit 703 obtains, in the session in which the communication terminal 102a and the communication terminal 102b participate, the image information of the session in which the communication terminal 102a and the communication terminal 102b participated in the past based on the communication ID of the communication terminal 102a and the communication ID of the communication terminal 102b.

For example, the obtain control unit (obtain unit) 703 may transmit, to the communication terminal 102a, in the session in which the communication terminal 102a and the communication terminal 102b participate, the information of the one or more sessions in which the communication terminal 102a and the communication terminal 102b participated, among the sessions whose image information are recorded. Further, the obtain control unit 703 may obtain, from the image information DB 611, the information of the session to be transmitted to the communication terminals 102 which participate in the session, based on the information received from the communication terminal 102a which designates one session among the one or more sessions.

The image information transmission unit (transmission unit) 704 transmits, in a second session (when a second session is held), the image information of a first session in which the communication terminal 102a and the communication terminal 102b have participated among the one or more sessions stored in the image information DB 611 to the communication terminals 102 which participate the second session. For example the image information transmission unit 704 may transmit the image information of the first session which is obtained by the obtain control unit 703 from the image information DB 611 to the communication terminal 102a which participates in the second session. The image information of the first session transmitted to the communication terminal 102a is displayed in the communication terminal 102a. Further, the image information of the first session is also transmitted to another communication terminal 102 such as the communication terminal 102b with which the image information is shared.

The storage/readout unit 606 stores various data in the storage unit 607 and reads out the various data from the storage unit 607, for example. The storage/readout unit 606 may be realized by programs executed by the CPU 401 shown in FIG. 4, for example.

The storage unit 607 may be a unit (means) for storing various kinds of information and data which include the authentication management DB 608, the terminal management DB 609, the session management DB 610, the image information DB 611, and the like. The storage unit 607 may be realized by the HD 404, the RAM 403 shown in FIG. 4, and the like for example.

### (Function of relay apparatus)

The relay apparatus 103 may transmit, to one or more communication terminals 102 which participate in the session, data transmitted from another communication terminal 102 which participates in the session. The data may be at least one of the image data, the sound data, and the image information.

For example, in FIG. 1, a case in which the remote class (an example of the session) may be conducted between the communication terminal 102a at the base 105A, the communication terminal 102c, 102d, and 102e at the base 106C will be described. In this case, the image information input by handwriting into the communication terminal 102c is transmitted to the relay apparatus 103. The relay apparatus 103, which receives the image information from the communication terminal 102c, transfers the received image information to the communication terminal 102a, 102d, and 102e which participate in the session.

Because the present embodiment includes the relay apparatus 103, in a session held between many communication terminals 102, each of the communication terminals can communicate by transmitting data via the relay apparatus 103 and does not have to transmit the data directly to another communication terminal 102 which is a communication partner. Thus, the relay apparatus 103 may reduce load of the communication process of the communication terminal 102. It should be noted that the communication system 100 may have a configuration in which two communication terminals 102 may communicate with each other peer-to-peer without communicating with the relay apparatus 103.

Next, the authentication management DB 608, the terminal management DB 609, and the session management DB 610 stored in the storage unit 607 of the communication management system 101 will be described. It should be noted that the image information DB 611 will be described later in a description of a process flow.

### (Authentication management DB)

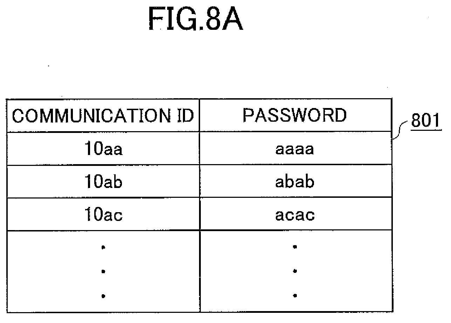

FIG. 8A is a drawing illustrating an example of an authentication management table 801. In the storage unit 607 of the communication management system 101, the authentication management DB 608 which includes the authentication management table 801 as shown in FIG. 8A may be structured. In the authentication management table 801, the communication ID of each of the communication terminals 102 is managed in association with the password of each of the communication terminals 102. The communication ID is the identification information of the communication terminal 102.

It should be noted that the communication ID according to the present embodiment may be an ID which is previously stored in the communication terminal 102 or an ID into which the user input the communication terminal 102. Alternatively, the communication ID may be identification information recorded in a subscriber identity module (SIM) mounted on the communication terminal 102. In a case in which the communication ID is the ID which the user inputs into the communication terminal 102, the communication management system 101 may manage the communication ID which is transmitted from the communication terminal 102 when requiring the login in association with the communication terminal 102 of a login request source. In this way, the communication terminal 102 may be identified based on the communication ID.

It should be noted that in the following descriptions, the communication IDs of the communication terminals 102a, 102b, and 102c are 10aa, 10ab, and 10ac, respectively.

### (Terminal management DB)

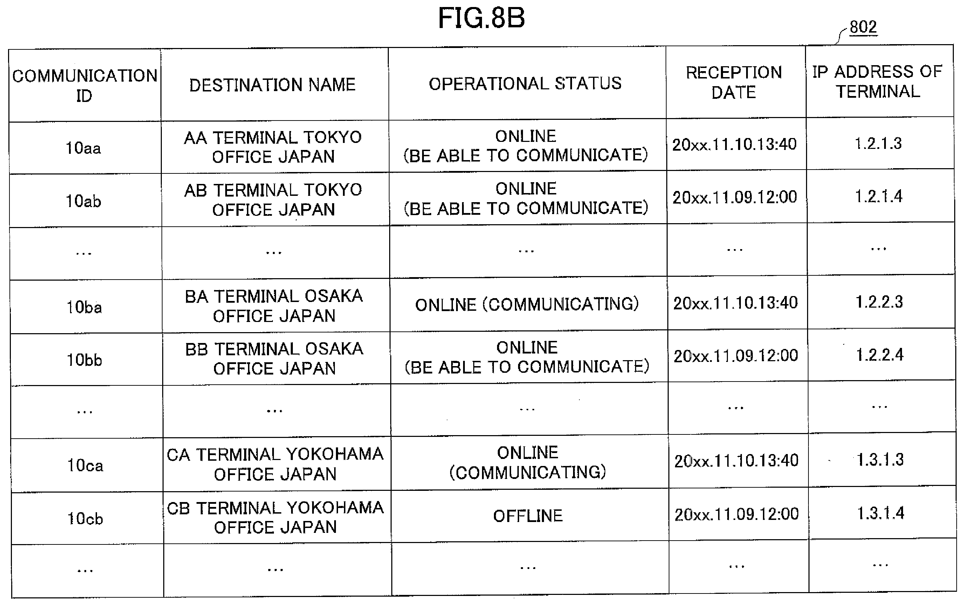

FIG. 8B is a drawing illustrating an example of a terminal management table 802. In the storage unit 607 of the communication management system 101, the terminal management DB 609 which includes the terminal management table 802 as shown in FIG. 8B may be structured. In the terminal management table 802, the destination name (terminal name) of the communication terminal 102, the operational status of the communication terminal 102, the reception date when the communication management system receives the login request, which will be described later, and the IP address of the communication terminal 102 are managed in association with the communication ID of each of the communication terminals 102.

It should be noted that the operational status indicates online status or offline status. The online status indicates that the communication terminal 102 which corresponds to the communication ID is connected to the communication management system 102. The offline status indicates that the communication terminal 102 which corresponds to the communication ID is not connected to the communication management system 102. Further, the online status has "be able to communicate" status in which the communication terminal 102 which corresponds to the communication ID is able to communicate, and "communicating" status in which the communication terminal 102 which corresponds to the communication ID is communicating with one or more communication terminals 102.

### (Session management DB)

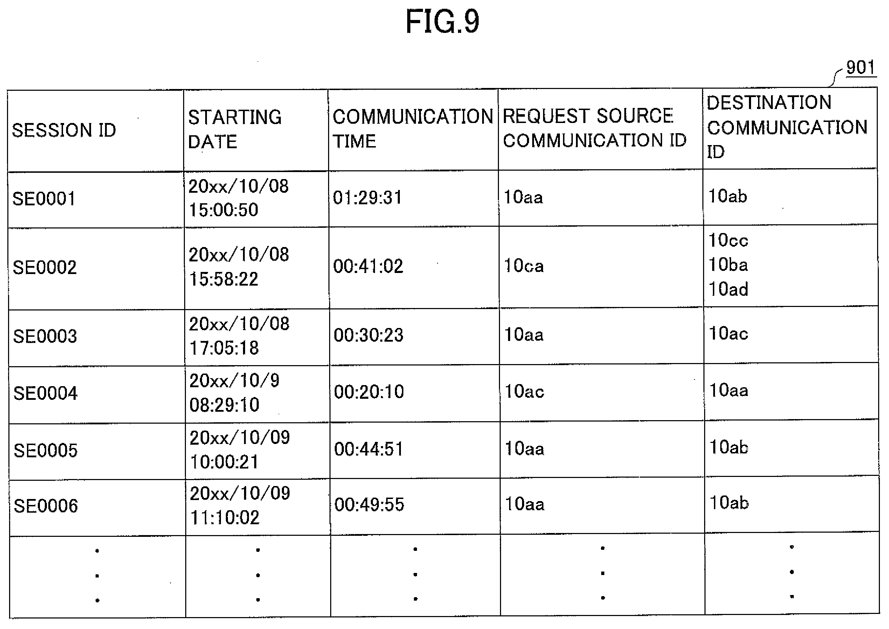

FIG. 9 is a drawing illustrating an example of a session management table 901. In the storage unit 607 of the communication management system 101, the session management DB 610 which includes the session management table 901 as shown in FIG. 9 may be structured. In the session management table 901, the starting date, the communication time, the communication ID of the request source, and the communication ID of the destination are managed in association with the corresponding session ID. The session ID is the identification information of the session held in the communication management system 101. The starting date indicates a date and time when the session, which corresponds to the session ID, has started. The communication time indicates a length of time in which the session, which corresponds to the session ID, has been held. The communication ID of the request source indicates the communication ID of the communication terminal 102 which has requested to start the session, which corresponds to the session ID. The communication ID of the destination indicates one or more communication IDs of the communication terminals 102 which have been designated as the destination (communication partner) by the communication terminal 102, which has requested to start the session, in the session which corresponds to the session ID. It should be noted that the number of the communication IDs of the destination may be one or more.

### <Flow of process>

Subsequently, an example of a process of the communication system 100 according to the present embodiment will be described.

### (Authentication process)

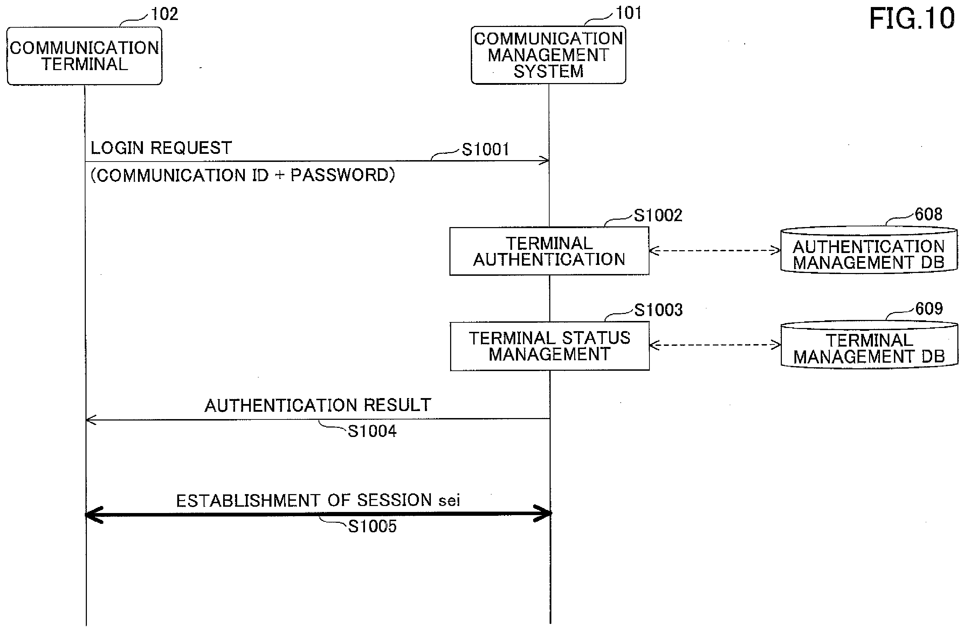

FIG. 10 is a sequence chart illustrating an example of an authentication process according to the present embodiment. The authentication process is a process for establishing the session between the communication management system 101 and each of the communication terminals 102 (referred to as the session sei hereinafter).

In step S1001, the communication control unit 616 of the communication terminal 102 transmits, to the communication management system 101, a login request for requesting a login. The process in step S1001 may be executed, for example, when the power of the communication terminal 102 is turned on, an application which corresponds to the communication system 100 is started in the communication terminal 102, a predetermined operation is performed on the application or the like. The login request may include, for example, the communication ID of the request source for identifying the communication terminal 102 of the login request source, the password, the IP address of the communication terminal 102 of the request source, and the like. In this way, the transmission/reception unit 601 of the communication management system 101 receives the login request and obtains the information included in the login request.

Next, the authentication unit 602 of the communication management system 101 performs authentication of the communication terminal 102 of the login request source in step S1002 by determining whether a combination of the communication ID and the password included in the received login request is recorded in the authentication management table 801. Then, in a case in which the authentication unit 602 determines that the communication terminal 102 has authorization according to the authentication (that is, the combination of the communication ID and the password included in the received login request is recorded in the authentication management table 801), the status management unit 603 manages (updates) the terminal management table 802 such that the operational status which corresponds to the communication terminal 102 of the login request source becomes online in step S1003.

Next, the transmission/reception unit 601 of the communication management system 101 transmits, to the communication terminal 102 of the login request source, the authentication result information which indicates that the communication terminal 102 is authenticated in step S1004. In this way, the communication control unit 616 of the communication terminal 102 receives the authentication result. Then, in a case in which the authentication unit 602 determines that the communication terminal 102 has the authorization in step S1002, the session sei is established between the communication terminal 102 of the login request source and the communication management system 101 in step S1005.

In the following descriptions, the session between the communication management system 101 and the communication terminal 102 is referred to as "the session sei" and the session between the communication terminals 102 is referred to as "the session sed".

### (Establishment process of session between communication terminals)

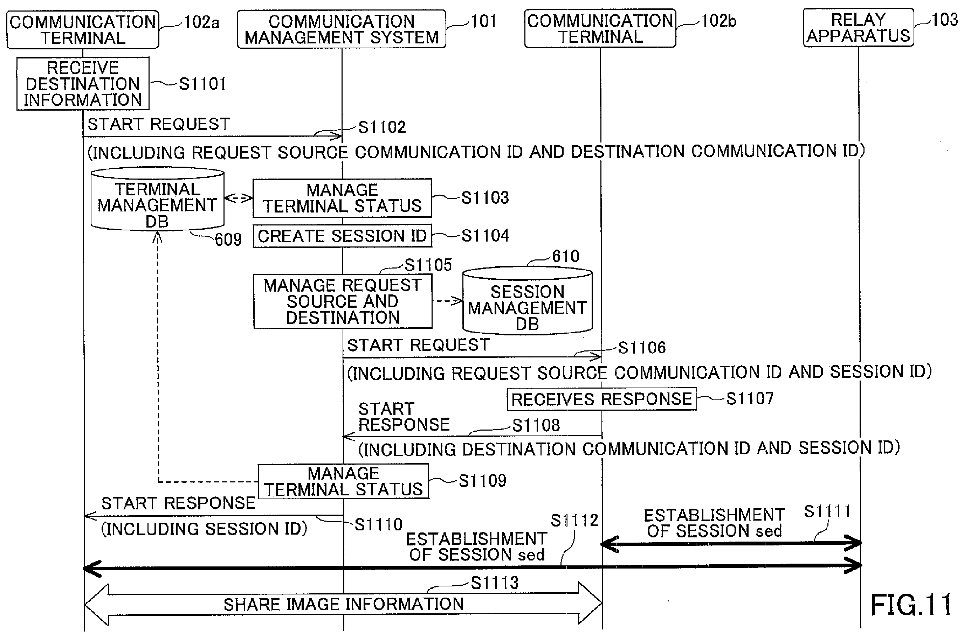

Next, a process for establishing the session sed, which is a session for transmitting the content data between the communication terminals 102, will be described with reference to FIG. 11.

FIG. 11 is a sequence chart illustrating an example of the establishment process of the session according to the present embodiment. As shown in FIG. 11, in response to an event in which the communication terminal 102a receives an input operation of destination information by the user (step S1101), the communication control unit 616 transmits, to the communication management system 101, a request for starting the communication in step S1102. The request for starting the communication may include the request source communication ID of the communication terminal 102a which requests to start the communication, the destination communication ID of the destination communication terminal 102b, the IP address of the communication terminal 102a, and the like.

The status management unit 603 of the communication management system 101 which has received the request for starting the communication updates the terminal management DB 609 in step S1103 based on the request source communication ID of the communication terminal 102a which requested to start the communication. For example, the status management unit 603 updates the terminal management table 802 shown in FIG. 8B such that the operational status which corresponds to the request source communication ID of the communication terminal 102a is changed to "online (communicating)"

Next, the session management unit 604 of the communication management system 101 creates a new session ID in step S1104. Further, the session information management unit 702 records the created session ID, the request source communication ID of the request source communication terminal 102a, and the destination communication ID of the destination communication terminal 102b in the session management table 901 shown in FIG. 9 in association with each other in step S1105.

Subsequently, the session control unit 701 of the communication management system 101 transmits the request for starting the communication to the destination communication terminal 102b in step S1106.
The request for starting the communication may include, for example, the communication ID of the communication terminal 102a which has requested to start the communication, the communication ID of the destination terminal 102b, the IP address of the communication management system 101, and the like. In this way, the communication control unit 616 of the destination communication terminal 102b receives the request for starting the communication.

In response to receiving the request, the communication terminal 102b may display, on the display unit 614 or the like, information which indicates that the request for starting the communication is received in order to prompt a response operation of the user. Further, in response to an event in which the communication terminal 102b receives the response operation by the user in step S1107, the communication control unit 616 transmits, to the communication management system 101, a start response including information which indicates whether the response (start request) is permitted in step S1108. The start response may include, for example, the destination communication ID of the destination communication terminal 102b, the session ID, the information which indicates whether the response is permitted, and the like. In a case in which an input for permitting the communication by the user is received at the communication terminal 102b side according to the information which indicates whether the response is permitted, the information indicates that the response is permitted. In a case in which an input for rejecting the communication by the user is received at the communication terminal 102b side according to the information which indicates whether the response is permitted, the information indicates that the response is not permitted. In the following, the case in which the communication terminal 102b transmits, to the communication management system 101, the start response including the information which indicates that the response (start request) is permitted will be described.

The communication management system 101 receives the start response from the communication terminal 102b. Further, the status management unit 603 of the communication management system 101 updates the terminal management DB 609 in step 1109 based on the communication ID of the destination communication terminal 102b included in the start response. For example, the status management unit 603 may change the operational status which corresponds to the communication ID of the destination communication terminal 102b to "online (communicating)" in the terminal management table 802 shown in FIG. 8B.

Further, in response to the start response from the communication terminal 102b, the session control unit 701 of the communication management system 101 transmits the start response to the request source communication terminal 102a. The start response may include, for example, the session ID, information which indicates the start of the session, and the like.

Subsequently, the session control unit 701 of the communication management system 101 controls the establishment of the session sed in which the image data and the sound data are transmitted between the communication terminal 102a and the communication terminal 102b via the network 104.

A method for establishing the session sed is not limited particularly. For example, the session control unit 701 may transmit, to the communication terminal 102a and the communication terminal 102b, connection information for connecting to the relay apparatus 103. For example, the connection information of the relay apparatus 103 may be included in the start request which is transmitted to the communication terminal 102b by the session control unit 701 in step S1106. Similarly, the connection information of the relay apparatus 103 may be included in the start response transmitted to the communication terminal 102a by the session control unit 701 in step S1110.

Further, the session control unit 701 transmits, to the relay apparatus 103, a request for starting a relay of the session established between the communication terminal 102a and the communication terminal 102b. In this way, for example, the session sed between the communication terminal 102b and the relay apparatus 103, and the session sed between the communication terminal 102a and the relay apparatus 103 may be established in step S1111 and step S1112.

According to the above described process, between the request source communication terminal 102a and the destination communication terminal 102b, the transmission and the reception of the image data and the sound data, and the sharing of the image information (stroke information), and the like are started in step S1113.

### (Accumulation process of the image information)

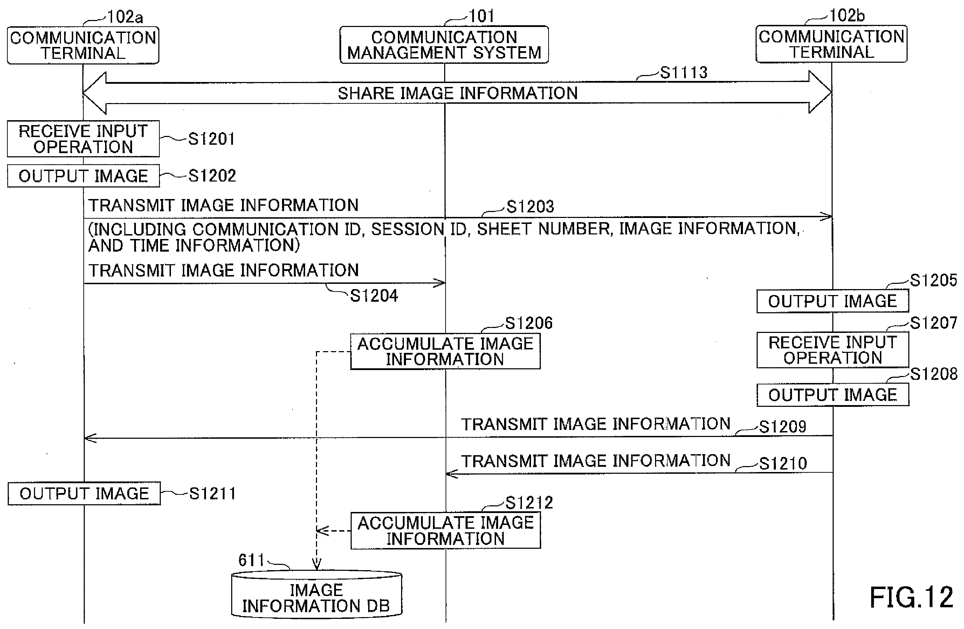

Next, a process after the sharing of the image information starts in step S 1113 shown in FIG. 11 will be described. It should be noted that the relay apparatus 103 is omitted in FIG. 12 because the relay apparatus 103 only relays (transfers) the data between the communication terminal 102a and the communication terminal 102b.

FIG. 12 is a sequence chart illustrating an example of an accumulation process of the image information according to the present embodiment. After the image information is shared in step S1113 shown in FIG. 11, for example, in response to receiving the image information such as the stroke information input by handwriting in step S1201, the communication terminal 102a outputs the image based on the image information to the display unit 614 in step S1202.

Further, the communication control unit 616 of the communication terminal 102a transmits the received image information to the communication terminal 102b with which the communication terminal 102a shares the image information in step S1203. The image information transmitted at that time may include, for example, the communication ID of the communication terminal 102a of the transmission source, the session ID, a seat number, the image information, time information, and the like. It should be noted that, in the present embodiment, the image information is also transmitted to the communication management system 101 in step S1204.

At that time, the image information transmitted to the communication management system 101 may be, for example, information which is transmitted by the communication control unit 616 of the communication terminal 102a to the communication management system 101 using the session sei established between the communication terminal 102a and the communication management system 101. Further, the image information transmitted to the communication management system 101 may be information which is transferred by the relay apparatus 103 to the communication management system 101 after the communication control unit 616 of the communication terminal 102a has transmitted the image information to the relay apparatus 103.

The communication terminal 102b which has received the image information transmitted from the communication terminal 102a outputs the image based on the received image information to the display unit 614 in step S1205. On the other hand, the communication management system 101 which has received the image information transmitted from the communication terminal 102a records (accumulates) the received image information in the image information DB 611 in step S1206.

Similarly, for example, in response to receiving the image information such as the stroke information input by handwriting in step S1207, the communication terminal 102b outputs the image based on the image information to the display unit 614 in step S1208. Further, the communication control unit 616 of the communication terminal 102b transmits the received image information to the communication terminal 102a with which the communication terminal 102b shares the image information in step S1209. It should be noted that the image information is also transmitted to the communication management system 101 in step S1210.

At that time, the image information transmitted to the communication management system 101 may be, for example, information which the communication control unit 616 of the communication terminal 102b transmits to the communication management system 101 using the session sei between the communication terminal 102b and the communication management system 101. Further, the image information transmitted to the communication management system 101 may be information which is transferred by the relay apparatus 103 to the communication management system 101 after the communication control unit 616 of the communication terminal 102b has transmitted the image information to the relay apparatus 103.

The communication terminal 102a which has received the image information transmitted from the communication terminal 102b outputs the image based on the received image information to the display unit 614 in step S1211. On the other hand, the communication management system 101 which has received the image information transmitted from the communication terminal 102b records (accumulates) the received image information in the image information DB 611 in step S1212.

According to the above described process, the pieces of image information output from the communication terminals 102 which share the image information are recorded in the image information DB 611 sequentially by the image information management unit 605 of the communication management system 101.

Here, the image information DB 611 will be described.

### (Image information DB)

In the storage unit 607 of the communication management system 101, the image information DB 611 which includes an image information management table 1301 is structured.

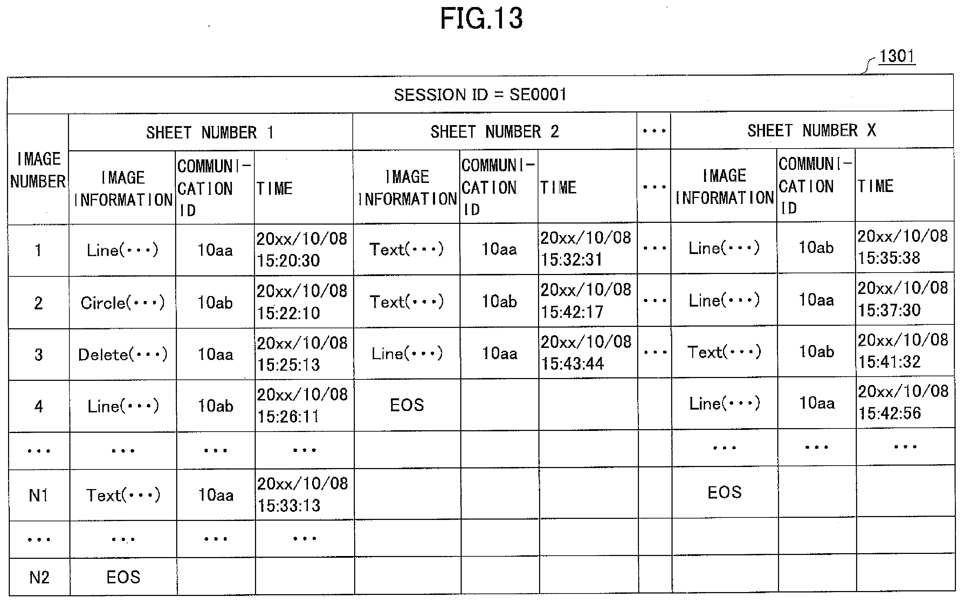

FIG. 13 is a diagram illustrating an example of the image information management table 1301 according to the present embodiment. The image information management table 1301 is created for each session ID. The session ID is the identification information of the session established between the communication terminals 102. For example, another image information management table 1301 is added (the information DB611 is updated) every time a new session between the communication terminals 102 is established.

As shown in FIG. 13, the image information management table 1301 is divided into a plurality of sections according to sheet numbers. In the image information management table 1301, for each section the image information, the communication ID of the transmission source communication terminal 102, and the time when the image information is generated are recorded in association with the image number.

The image information may include, for example, stroke information which indicates strokes such as lines and circles, text information which indicates text, and delete information which indicates an image to be deleted. Further, the image information may include coordinate information which indicates positions of the image to be output or to be deleted and information which indicates a size, color, or a font of the image. Further, the image information may include image information of an image to be modified in addition to the above described image information of the image to be added or to be deleted.

In the present embodiment, the text is used as examples of the image. The texts may include characters, symbols and the like. The image information sets are recorded in fields of the image information in the image information management table 1301 in order (descending order) of the image number until the end of service (EOS).

Further, according to the present embodiment, the communication terminal 102 can output different images in each workspace. The workspaces are switchable by a tab, a thumbnail or the like displayed in the display unit 614. The above described sheet number is a number for identifying the workspace. It should be noted that an arbitrary wording for indicating the area in which the image is drawn such as a worksheet, a space, a workspace may be used instead of the sheet.

According to the above described configuration, for example, the display control unit 615 of the communication terminal 102a may superpose the image based on the image information in order to output the image in the display unit 614 every time the image information such as "Line", "Circle", and "Text" is generated in response to receiving the note detection signal at the communication terminal 102a. Further, the display control unit 615 may superpose the image based on the image information in order to output the image in the display unit 614 every time the image information such as "Line", "Circle", and "Text" is transmitted from the communication terminal 102b which is the communication partner.

Further, the display control unit 615 may delete the image which corresponds to the image information "Delete" among the images output in the superposing manner every time the image information "Delete" is generated in response to receiving the deletion detection signal at the communication terminal 102a.

Further, the display control unit 615 may delete the image which corresponds to the image information "Delete" among the images output in the superposing manner every time the image information "Delete" is transmitted from the communication terminal 102b which is the communication partner.

That is, the image shared between the communication terminals 102 in the course of the communicaton of the session sed can be added or deleted partly.

Further, every time one of the communication terminals 102 transmits the image information, the image information management unit 605 of the communication management system 101 records, in the image information management table 1301 of the image information DB 611, the transmitted image information, the communication ID, the time and the like.

### (Restoring process of the image information)

For example, the communication system 100 according to the present embodiment, after the session starts or during the session, may restore the image information recorded in the image information DB 611 in order to share the image information between the communication terminals 102 in response to the operation of the communication terminal 102 by the user. In this way, the user of the communication system 100 can easily restart the previous session using the restored image.

Specifically, the storage unit 607 can store image information of one or more sessions. The image information includes image information of a first session in which a first communication terminal 102 and a second communication terminal 102 have participated in the past. The storage unit 607 can store the image information of the first session in association with identification information of the first session. When a second session, which differs from the first session, is held between the first communication terminal 102 and the second communication terminal 102, the image information transmission unit 704 can transmit, to the first communication terminal 102 and the second communication terminal 102, which participate in the second session, the image information of the first session stored in the storage unit 607. In this way, the first communication terminal 102 and the second communication terminal 102 can hold the second session using the image information of the first session.

Further, when a third session, which differs from the first session, is held between a third communication terminal 102 and a fourth communication terminal 102, the image information transmission unit 704 can restrict transmission of, to the third communication terminal 102 and the fourth communication terminal 102 which participate in the third session, the image information of the first session stored in the storage unit 607. It should be noted that the first communication terminal 102 and the second communication terminal 102 do not participate in the third session.

Moreover, when a fourth session, which differs from the first session, is held between the third communication terminal 102 and the first communication terminal 102, the image information transmission unit 704 can restrict transmission of, to the third communication terminal 102 and the first communication terminal 102 which participate in the fourth session, the image information of the first session stored in the storage unit 607. It should be noted that the second communication terminal 102 and the fourth communication terminal 102 do not participate in the fourth session.

Moreover, after the first to fourth sessions have been held and the pieces of image information of the first to fourth sessions have been stored in the storage unit 607, when a fifth session in which the first communication terminal 102 and the second communication terminal 102 participate is held, the image information transmission unit 704 can transmit, to the first communication terminal 102 and the second communication terminal 102, the image information of the first session and the second session, because the communication terminals 102 participating in the fifth session match the communication terminals 102 which have participated in the first session and the second session.

At that time, the image information transmission unit 704 can restrict the transmission, to the first communication terminal 102 and the second communication terminal 102, of the image information of the third session and the image information of the fourth session, because the communication terminals 102 participating in the fifth session do not match the communication terminals 102 which have participated in the third session and the fourth session.

As described above, the present embodiment can select, from the image information of one or more sessions stored in the storage unit 607, image information to be transmitted in accordance with the communication terminals 102 which participate in a session to be held.

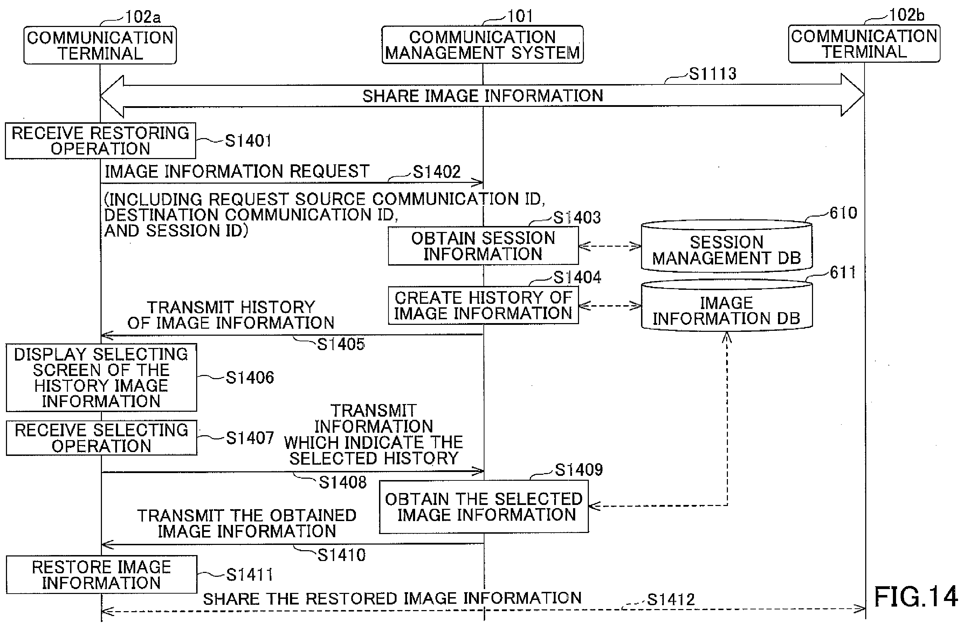

FIG. 14 is a sequence chart illustrating an example of a restoring process of the image information according to the present embodiment. The communication management system 101, for example, may start the restoring process of the image information at an arbitrary timing, after the image information has been shared between the communication terminal 102a and the communication terminal 102b in step S1113 according to the establishment process of the session shown in FIG. 11.

For example, as shown in FIG. 14, in response to an event in which the communication terminal 102a receives a restoring operation from the user in step S1401, the communication control unit 616 of the communication terminal 102a transmits an image information request to the communication management system 101 in step S1402. The image information request may include, for example, the communication ID of the request source communication terminal 102a, the communication ID of the destination communication terminal 102b, the session ID of the session currently being held, and the like.

In step S1403, the obtain control unit 703 of the communication management system 101, which has received the image information request from the communication terminal 102a, obtains the session information (session management table 901, for example) from the session management DB 610. The obtain control unit 703, which has obtained the session information, can specify one or more sessions in which the communication terminal 102a and the communication terminal 102b participated in the past based on the communication ID of the communication terminal 102a and the communication ID of the communication terminal 102b included in the image information request.

In step S1404, the obtain control unit 703 creates history of the image information with regard to the one or more sessions held in the past between the communication terminal 102a and the communication terminal 102b. For example, the obtain control unit 703 obtains (extracts) information of the one or more sessions in which the communication terminal 102a and the communication terminal 102b participated among the sessions whose image information sets are recorded in the image information DB 611. In this way, among the sessions held between the communication terminal 102a and the communication terminal 102b in the past, a list (history) of the image information recorded in the image information DB 611 is created.

In step S1405, the obtain control unit 703 transmits the created history of the image information (the information of the one or more sessions in which the communication terminal 102a and the communication terminal 102b participated among the sessions whose image information sets are recorded in the image information DB 611) to the communication terminal 102a.

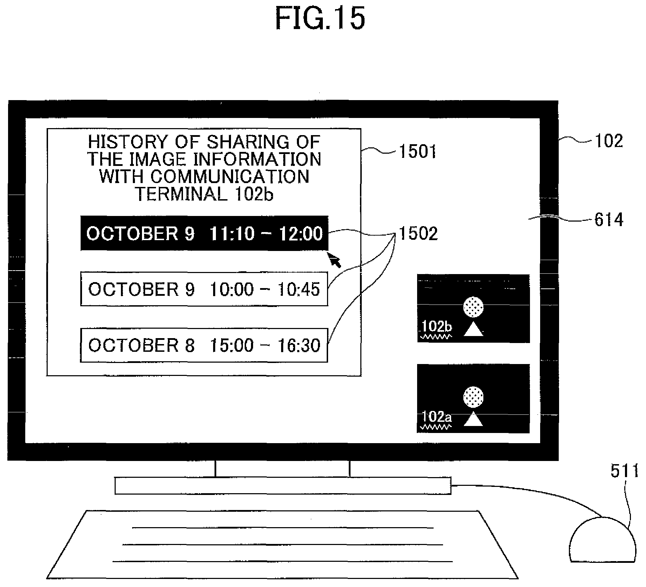

In step S1406, the display control unit 615 of the communication terminal 102a, which has received the history of the image information from the communication management system 101, causes the display unit 614 to display a selecting screen of the history image information in order to prompt the user to select the image information to be restored. For example, the display control unit 615 causes the display unit 614 to display the information of the one or more sessions received from the communication management system 101 in a selectable manner. FIG. 15 shows a screen example which is displayed in the display unit 614 of the communication terminal 102a at that time.

FIG. 15 is an example of a selecting screen 1501 of the history of the image information according to the present embodiment. In the example shown in FIG. 15, the selecting screen 1501 of the history of the image information is displayed in the display unit 614 of the communication terminal 102 (the communication terminal 102a). In the selecting screen 1501 of the history of the image information, selecting buttons 1502 are displayed in a selectable manner. The selecting buttons are buttons for selecting, among the sessions whose image information are recorded in the image information DB 611, the one or more sessions in which the communication terminal 102a and the communication terminal 102b participated.

The user of the communication terminal 102 may select, for example, one of the selecting buttons 1502 which indicates (include) the time and date of the remote class of the previous time from the selecting screen 1501 of the history of the image information displayed in the display unit 614 using the input unit 511 of the communication terminal 102 or the like.

For example, in a case in which the communication terminal 102 is a shared communication terminal 102 and many users use the shared communication terminal 102 for various sessions, it may be difficult to select, from histories of the various sessions, a necessary session such as the history of the remote class of the previous time. However, the communication system 100 according to the present embodiment can display in the selectable manner, based on the communication ID of the communication terminal 102a and the communication ID of the communication terminal 102b which are participating in the current session, the information of the one or more sessions held in the past by the same combination of the communication terminals 102 (held by the communication terminal 102a and the communication terminal 102b). In this way, the user of the communication terminal 102a can easily select the history of the previous session.

It is preferable that the selecting buttons 1502 displayed in the selecting screen 1501 include information which indicates the time and date of the session whose image information is recorded. The user of the communication terminal 102a can easily confirm, for example, the time and date when the previous remote class was held. Thus the user can easily restore the image information of the previous remote class. Further, for example, because the information which indicates the time and date of the session whose image information is recorded can be obtained easily from the session management table 901 shown in FIG. 9, the user can obtain the image information of the previous remote class without inputting the session name, the session ID, or the like.

The description of the sequence chart shown in FIG. 14 will be started again.

In response to an event in which the operation input reception unit 613 of the communication terminal 102a receives the selecting operation of the user from the selecting buttons 1502 shown in FIG. 15 or the like in step S1407, the communication control unit 616 transmits, to the communication management system 101, the information which indicates the selected history in step S1408. For example, among the pieces of information of the one or more sessions displayed in the display unit 614, the communication control unit 616 may transmit, to the communication management system 101, information which designates one session selected by the user.

The obtain control unit 703 of the communication management system 101, which has received the information which indicates the selected history from the communication terminal 102a, obtains the image information which corresponds to the selected history (session) from the image information DB 611 in step S1409. For example, based on the information which has been received from the communication terminal 102a and designates the one session selected by the user, the obtain control unit 703 determines the image information of the session to be obtained from the image information DB 611, and obtains the image information.

In step S1410, the image information transmission unit 704 of the communication management system 101 transmits the image information obtained by the obtain control unit 703 to the communication terminal 102 which participates in the current session. For example, the image information transmission unit 704 transmits the obtained image information to the communication terminal 102a which has transmitted the image information request.

In step S1411, the display control unit 615 of the communication terminal 102a, which has received the image information from the communication management system 101, restores the image information of the session selected in step S1407 in order to cause the display unit 614 to display the image information based on the received image information.

In step S1412, the communication terminal 102a shares the restored image information with the communication terminal 102b with which the image information is shared. In this way, the image displayed in the display unit 614 of the communication terminal 102a is also displayed in the communication terminal 102b.

According to the above described process, for example, from the plurality of sessions performed in the past between the communication terminal 102a and the communication terminal 102b, the user of the communication terminal 102a may easily restore the images of the previous session selectively.

It should be noted that the process shown in FIG. 14 is a preferable example of the restoring process of the image information according to the present embodiment. For example, in steps S1404 to S1409 shown in FIG. 14, among the sessions whose image information sets are recorded in the image information DB 611, the obtain control unit 703 may obtain the image information of the latest session in which the communication terminal 102a and the communication terminal 102b have participated. Further, in step S1404, in a case in which the number of sessions in which the communication terminal 102a and the communication terminal 102b have participated is one among the sessions whose image information sets are stored in the image information DB 611, the process in step S1405 to S1408 may be omitted.

In the following, an example of a displaying screen displayed in the communication terminal 102a according to the above described process will be described.

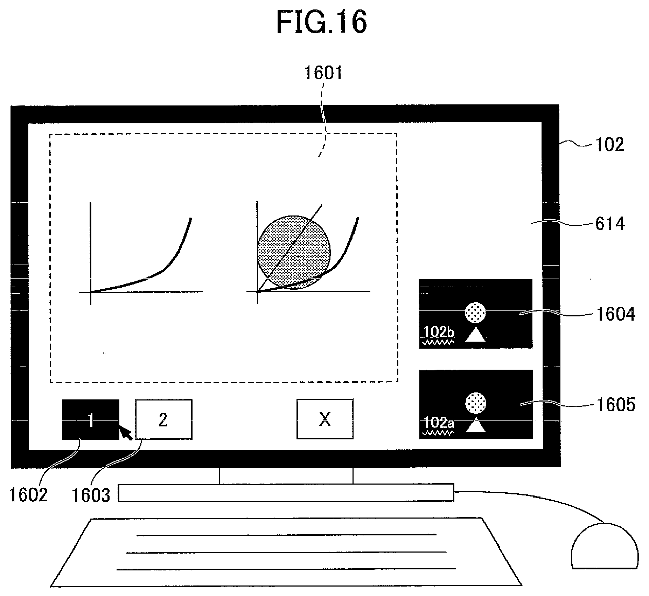

FIG. 16 is a drawing illustrating an example of the displaying screen displayed in the communication terminal 102a according to the present embodiment. FIG. 16 shows an example of the displaying screen displayed in the communication terminal 102a after the image information has been restored in step S 1411 in FIG. 14. In the example shown in FIG. 16, restored image information 1601 is displayed in the display unit 510 of the communication terminal 102a. The restored image information 1601 may be, for example, image information recorded when the previous remote class was conducted. The user of the communication terminal 102a may, for example, restart and continue the previous remote class using the restored image information 1601.

In FIG. 16, a thumbnail "1" 1602 shown under the restored image information 1601, for example, may correspond to the sheet number of the image information management table 1301 shown in FIG. 13. For example, when the thumbnail "1" 1602 is selected in FIG. 16, the image information of the sheet number 1 is displayed in the display unit 510 as the restored image information 1601. Similarly, when a thumbnail "2" 1603 is selected in FIG. 16, the image information of the sheet number 2 is displayed in the display unit 510 as the restored image information 1601.

Further, in the example shown in FIG. 16, a projected image 1604 at the base of the communication terminal 102b side and a projected image 1605 at the base of the communication terminal 102a side are displayed in the display unit 510 of the communication terminal 102a. In this way, the participants of the session may establish the session such as the remote class, the remote conference, and the like using the projected image, the sound of other participants, and the shared image displayed in the display unit 510.

### (Process after the image information is restored)

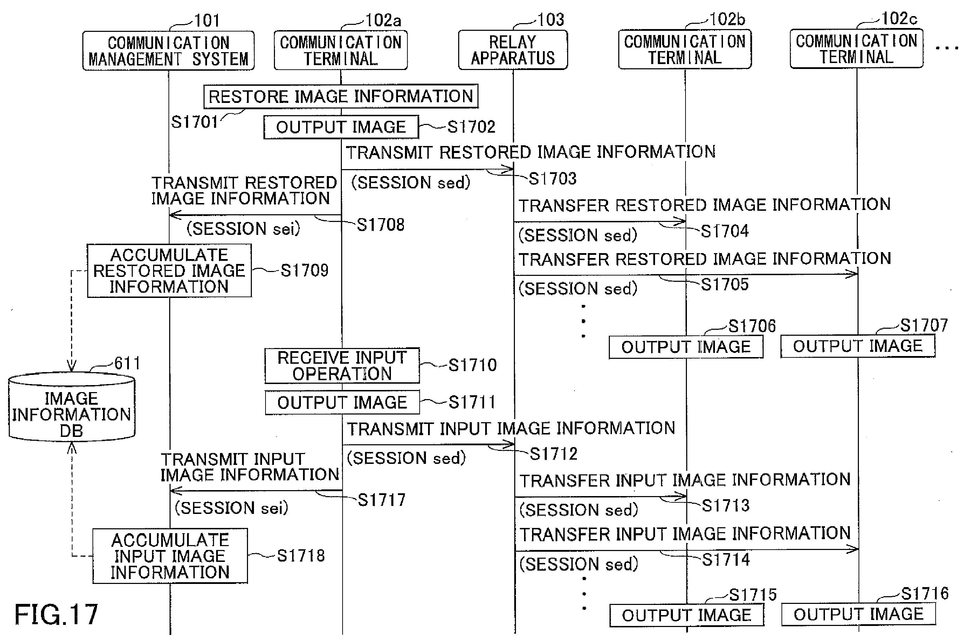

FIG. 17 is a sequence chart illustrating an example of a process after the image information is restored according to the present embodiment. Further, an example of a process in a case in which three or more communication terminals 102 share the image information will be described together with reference to FIG. 17.

Before the process starts in FIG. 17, the communication terminals 102a, 102b, and 102c may, for example, execute the authentication process shown in FIG. 10 and the establishment process of the session shown in FIG. 11 and share the image information with each other.

In step S1701 shown in FIG. 17, the communication terminal 102a may restore the image information according to the restoring process shown in FIG. 14. In response to restoring the image information, the display control unit 615 of the communication terminal 102a outputs the image based on the restored image information to the display unit 614 in step S1702.

Further, the communication control unit 616 of the communication terminal 102a transmits the restored image information to the relay apparatus 103 in step S1703 using the session sed. At that time, the restored image information transmitted to the relay apparatus 103 includes the current session ID.

The relay apparatus 103, which has received the restored image information form the communication terminal 102a, transfers the received image information to the other communication terminals 102b and 102c which participate in the session in step S1704 and step S1705 based on the session ID included in the received information.

The display control units 615 of the communication terminals 102b and 102c, which have received the restored image information from the relay apparatus 103, cause the corresponding display units 614 to display the image in step S1706 and step S1707, respectively, based on the received and restored image information.

As described above, the communication system 100 according to the present embodiment can easily restore and share the image information of the previous session if three or more communication terminals 102, which share the image information, participate the session.

Further, in step S1707, the communication control unit 616 of the communication terminal 102a according to the present embodiment may transmit, to the communication management system 101, the information similar to the restored image information transmitted in step S1703, using the session sei, for example. At that time, the restored image information transmitted to the communication management system 101 may include the current session ID and the like.

The image information management unit 605 of the communication management system 101, which has received the restored image information from the communication terminal 102a, records the restored information in the image information DB 611 as the image information of the current session in step S1709.

Next, in response to an event in which the communication terminal 102a receives an input operation of new image information with respect to the image displayed in the display unit 614 in step S1710, the display control unit 615 displays the image, which is input, on the image being displayed in a superimposing manner in step S1711. Further, the communication control unit 616 of the communication terminal 102a transmits the image, which is input, to the relay apparatus 103 in step S1712 using the session sed.

The relay apparatus 103, which has received the input image information, transfers the received image information to the other communication terminals 102b and 102c which participate in the session in step S1713 and step S1714, respectively, based on the session ID included in the received information.

The display control units 615 of the communication terminals 102b and 102c, which have received the input image information from the relay apparatus 103, cause the corresponding display unit 614 to display the image in step S1715 and step S1716, respectively, based on the received input image information.

Further, the communication control unit 616 of the communication terminal 102a may transmit, to the communication management system 101, the information similar to the restored image information, which has been transmitted in step S1703, in step S1717 using the session sei, for example.

The image information management unit 605 of the communication management system 101, which has received the input image information from the communication terminal 102a, records the input information in the image information DB 611 as the image information of the current session in step S1718.

As described above, the communication system 100 according to the present embodiment can restore the image, which has been input in the previous session, in order to input and manage the new image information with respect to the restored image.

### (Another system configuration)

In the above, the system configuration of the communication system 100 shown in FIG. 1 is described. However, the system configuration shown in Fig. 1 is an example, and the present invention is not limited to this. In the following, another configuration example of the communication system 100 according to the present invention will be described briefly.

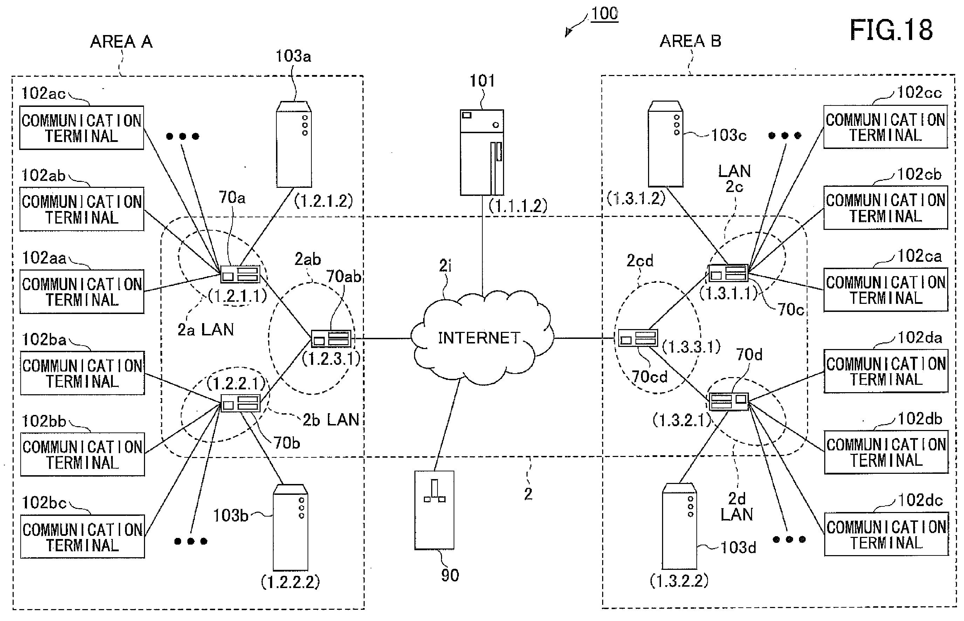

FIG. 18 is a drawing illustrating another configuration example of the communication system 100 according to the embodiment. As shown in FIG. 18, the communication system 100 includes a plurality of communication terminals 102aa to 102dc, a plurality of relay apparatuses (103a, 103b, 103c, and 103d), a communication management system 101, and a program supply system 90.

It should be noted that an arbitrary communication terminal of the communication terminals 102aa to 102dc is referred to as "the communication terminal 102". Similarly, an arbitrary relay apparatus of the relay apparatuses (103a, 103b, 103c, and 103d) is referred to as "the relay apparatus 103".

The user of each of the communication terminals 102 may perform the session such as the remote class and the TV conference with another user of the communication terminal 102 using images and sound transmitted and received in real time. Further, the communication terminals 102 may share the image information such as a character, a figure, and a symbol which are input by handwriting. The relay apparatus 103 relays the content data between the communication terminals 102. The communication management system 101 manages the communication terminals 102 and the relay apparatuses 103 in an integrated fashion.

A plurality of routers (70a to 70d, 70ab, 70cd) shown in FIG. 18 select the optimum path for the image data and the sound data. In this example, an arbitrary router of the routers (70a to 70d, 70ab, 70cd) may be referred to as "the router 70". The program supply system 90 includes a storage means (unit) in which a communication apparatus program for causing the communication terminals 102 to realize various kinds of functions or various kinds of means is stored. The program supply system 90 can transmit the communication apparatus program to the communication terminals 102.

The storage means of the program supply system 90 stores a relay apparatus program for causing the relay apparatus 103 to realize various kinds of functions or various kinds of means. The program supply system 90 can transmit the relay apparatus program to the relay apparatus 103. Further, the storage means of the program supply system 90 stores a communication management program for causing the communication management system 101 to realize various kinds of functions or various kinds of means. The program supply system 90 can transmit the communication management program to the communication management system 101.

The communication terminals (102aa, 102ab, 102ac), the relay apparatus 103a, and the router 70a are connected via a LAN 2a in a communicable manner (be able to communicate with each other). The communication terminals (102ba, 102bb, 102bc), the relay apparatus 103b, and the router 70b are connected via a LAN 2b in a communicable manner. Further, the LAN 2a and the LAN 2b are connected via a private line 2ab including a router 70ab in a communicable manner, and are structured (located) within a predetermined area A. For example, the area A is Japan, and the LAN 2a is structured in an office in Tokyo, and the LAN 2b is structured in an office in Osaka.

On the other hand, the communication terminals (102ca, 102cb, 102cc), the relay apparatus 103c, and the router 70c are connected via a LAN 2c in a communicable manner. The communication terminals (102da, 102db, 102dc), the relay apparatus 103d, and the router 70d are connected via the LAN 2d in a communicable manner. The LAN 2c and LAN 2d are connected via a private line 2cd including a router 70cd in a communicable manner, and are structured within a predetermined area B. For example, the area B is America, and the LAN 2c is structured (located) in an office in New York, and the LAN 2d is structured in an office in Washington D.C. The area A and the area B are connected via the routers (70ab, 70cd) to the Internet 2i in a communicable manner.

Further, the communication management system 101 and the program supply system 90 are connected via the Internet 2i to the communication terminals 102 and the relay apparatuses 103 in a communicable manner. The communication management system 101 and the program supply system 90 may be installed in the area A or the area B, or may be installed in an area other than the area A and the area B.

It should be noted that in the example shown in FIG. 18, the communication network 2 is structured to include the LAN 2a, the LAN 2b, the private line 2ab, the Internet 2i, the private line 2cd, the LAN 2c, and the LAN 2d.

As described above, the communication system 100 according to the present embodiment may increase the number of the communication terminals 102 or the network 104 in order to hold the session in various countries, areas, offices or the like and to restart the session easily.

### <Supplement to embodiment>

Each program for the communication terminal 102 and the communication management system 101 may be provided (distributed) on a recording medium which can be read out by the computer such as the recording medium 306 and the recording medium 406. The recording medium may have an installable file form or an executable file form. Further, an optical disk such as a Compact Disc Recordable (CD-R), a Digital Versatile Disk (DVD), and a blue-ray disc may be used for the recording medium. Further, the above described recording medium, the HD 404, the storage unit 504, or the like which stores the program may be provided to a domestic or overseas as a program product.

Further, the communication terminal 102 and the communication management system 101 according to the above described embodiments may be configured with a computer or may be configured with plural computers to which arbitrarily divided parts (functions or means) are assigned, respectively.

Moreover, although an image sharing apparatus (intermediate concept) such as the communication terminal 102 (subordinate concept) is used for performing the session such as the remote class and the remote conference, the present invention is not limited to this. The present invention may be used in a field of communication including the TV conference or the like as a broad concept. For example, a projector system, digital signage, a text sharing system, a car navigation system, a communication system for game machines or the like may be used for the embodiment.

Further, the present invention is not limited to these embodiments, but various variations and modifications may be made without departing from the scope of the present invention.

The present application is based on and claims the benefit of priority of Japanese Priority Application No. 2015-028808 filed on Feb, 17, 2015, with the Japanese Patent Office, the entire contents of which are hereby incorporated by reference.

## Claims

1. An image management system for transmitting information via a session established between communication terminals comprising:
a storage unit configured to store image information of an image output from at least one of a first communication terminal and a second communication terminal in a first session in which the first communication terminal and the second communication terminal have participated, the storage unit storing the image information in association with identification information of the first session; and
a transmission unit configured to transmit, to the first communication terminal and the second communication terminal, the image information stored in the storage unit and associated with the identification information of the first session when the first communication terminal and the second communication terminal participate in a second session which differs from the first session.

2. The image management system according to claim 1,
wherein the storage unit is configured to store identification information and image information of one or more sessions in which the first communication terminal and the second communication terminal have participated,
wherein the transmission unit is configured to transmit, to the first communication terminal, information which indicates the one or more sessions, and
wherein the image management system includes an obtain unit configured to obtain, from the storage unit, the image information to be transmitted to the first communication terminal and the second communication terminal based on information received from the first communication terminal for designating one session from the one or more sessions in which the first communication terminal and the second communication terminal have participated.

3. The image management system according to claim 2, further comprising:
a management unit configured to manage the identification information of the one or more sessions, identification information of the first communication terminal, and identification information of the second communication terminal in association with each other,
wherein the obtain unit is configured to specify the one or more sessions in which the first communication terminal and the second communication terminal have participated based on the identification information of the first communication terminal, the identification information of the second communication terminal, and information managed by the management unit.

4. The image management system according to any one of claim 1 to 3, wherein the session is a remote class or a remote conference held between a plurality of bases.

5. The image management system according to any one of claim 1 to 4, wherein the transmission unit is configured to restrict a transmission, to a third communication terminal and a fourth communication terminal, of the image information stored in the storage unit and associated with the identification information of the first session when the third communication terminal and the fourth communication terminal participate in a third session which differs from the first session, the first communication terminal and the second communication terminal not participating in the third session.

6. The image management system according to any one of claim 1 to 5, wherein the transmission unit is configured to restrict a transmission, to a third communication terminal and the first communication terminal, of the image information stored in the storage unit and associated with the identification information of the first session when the third communication terminal and the first communication terminal participate in a fourth session which differs from the first session, the second communication terminal not participating in the fourth session.

7. A communication device able to communicate with the image management system according to claim 2 or 3, the communication device comprising:
a display control unit configured to cause a display unit to display information of the one or more sessions received from the image management system in a selectable manner; and
a communication control unit configured to transmit, to the image management system, information for designating the one session among the information of the one or more sessions displayed by the display unit, the one session being selected by a user,
wherein the communication device is the first communication terminal or the second communication terminal.

8. The communication device according to claim 7, wherein the information of the one or more sessions displayed by the display unit includes information of dates when the one or more sessions have been held.

9. A communication system comprising:
the image management system according to claim 2 or 3; and
the communication device according to claim 7 or 8.

10. A communication system including the image management system according to any one of claim 1 to 6, the communication system comprising:
the first communication terminal; and
the second communication terminal,
wherein the first communication terminal and the second communication terminal are configured to output, to corresponding display units, an image in accordance with an input operation,
wherein the first communication terminal is configured to transmit, to the second terminal and the image management system, image information of the image output to the corresponding display unit, and
wherein the second communication terminal is configured to transmit, to the first terminal and the image management system, image information of the image output to the corresponding display unit.

11. A non-transitory recording medium having a program recorded therein that is executable by a computer, the program when executed causing the computer to implement functions of:
a storage unit configured to store image information of an image output from at least one of a first communication terminal and a second communication terminal in a first session in which the first communication terminal and the second communication terminal have participated, the storage unit storing the image information in association with identification information of the first session; and
a transmission unit configured to transmit, to the first communication terminal and the second communication terminal, the image information stored in the storage unit and associated with the identification information of the first session when the first communication terminal and the second communication terminal participate in a second session which differs from the first session.

12. An image management method for transmitting information via a session established between communication terminals comprising:
a step of storing, in a storage unit, image information of an image output from at least one of a first communication terminal and a second communication terminal in a first session in which the first communication terminal and the second communication terminal have participated, the storage unit storing the image information in association with identification information of the first session; and
a step of transmitting, to the first communication terminal and the second communication terminal, the image information stored in the storage unit and associated with the identification information of the first session when the first communication terminal and the second communication terminal participate in a second session which differs from the first session.
